# EUROPEAN PATENT SPECIFICATION

(11) **EP 0 691 619 B1**
(45) Date of publication and mention of the grant of the patent: **07.02.2007**
(21) Application number: 95304515.0
(22) Date of filing: 27.06.1995
(51) Int. Cl.: G06F 15/02

(54) **System for accessing and distributing electronic documents**
System zum Zugriff und zur Verteilung von elektronischen Dokumenten
Système d'accès et de distribution de documents électroniques

(30) Priority: 27.06.1994 GB 9412871; 12.12.1994 GB 9425184
(43) Date of publication of application: 10.01.1996
(73) Proprietor: Xerox Corporation, Rochester, NY 14644 (US)
(72) Inventor: Flynn, Michael J., Cambridge, CB1 1DG (GB); Lamming, Michael G., Cambridge, CB2 2RN (GB)
(74) Representative: Grünecker, Kinkeldey, Stockmair & Schwanhäusser Anwaltssozietät

(56) References cited:
- WO-A-94/12938
- IBM TECHNICAL DISCLOSURE BULLETIN, vol. 36, no. 12, December 1993, NEW YORK, US, page 273 XP000418967 "TRANSCOME - Transportable Computing Environment"

## Description

This invention relates generally to data access and distribution, and more particularly to a system for transferring electronic documents between portable computer devices, and between such devices and various forms of office equipment.

Electronic documents play an increasing role in our lives. Indeed nowadays many, if not most, documents are created electronically; and we take it for granted that electronic documents are easier to store, retrieve, copy, print, update and distribute than paper documents.

For desk-bound, document-intensive workers this may indeed be the situation, but for people whose jobs require them to be more mobile, existing technology does not greatly assist in such tasks. For a mobile worker, electronic documents are significantly less convenient to *locate, read and distribute,* and yet these activities appear to be the dominant document-intensive activities outside the office. When away from his office or workstation (e.g., for a meeting), a worker is rarely able to access all or most of his electronic documents, and he will often resort to carrying a bulky set of paper documents as a precaution, even though they may not in fact be needed for the meeting.

There are many situations in which a paper document is clearly the most effective medium for exchanging information. Sometimes the intended recipient has no immediate need for the information, but they see a potential need for it in the future. In this situation it seems preferable to exchange the document electronically. Nevertheless they are forced to carry the document back to their office or home (perhaps having first stopped off at a copier or printer to obtain it), and contribute to their stack of paper documents.

Although many documents are created electronically, a relatively small proportion is distributed in that way. For example, if a person (the sender) wants to give an electronic document to someone (the recipient) they are currently talking to, the process essentially requires that the sender must break off the conversation, go to a workstation, and search for the document they wish to hand over; find out the recipient's electronic address; check how best to encode the data for the recipient's machine; and then transfer the document. Compared with simply handing over a paper document this process is disruptive, time-consuming and unreliable. Furthermore, rarely can the sender or the recipient immediately confirm that the document has been successfully transferred between them. To do so requires the recipient to go to his workstation, search for the document and explicitly acknowledge to the sender that the document was received.

Another problem arises even when a person decides to hand over a paper copy to the recipient. If he doesn't have a paper copy to hand, to avoid disruption he will often promise to print the document later and hand it over after the meeting has concluded, a task he may simply forget to do. If it is decided to print out the document there and then, the person must break off from the conversation, find the electronic document, find a printer that isn't in use, send the document to the printer, and then *remember* to go and pick it up when printing is complete. However, people often forget to pick up their output; and if a confidential document has been printed on a shared (network) printer, the sender must ensure that he is on hand to collect it immediately.

A further problem exists for workers who are unable to gain access to their workstation or network: it is now commonplace for members of a committee to travel long distances to attend important meetings. For example, standards committees convene experts from all over the world; and participants try to arrive prepared with all the information they might need to present to their colleagues, respond to questions, or take decisions. Often the committee meets at one of several different locations each time: the European Parliament, for example, regularly moves between Brussels, Luxembourg and Strasbourg. It may be impossible for the attendees to anticipate the document needs, or they may not be able to afford to carry printed versions of everything. When a missing document is needed urgently, the situation can be remedied by a telephone call back to the office to someone who has access to the electronic document and can print it out or fax it to the meeting. At best this disrupts the flow of the meeting, and there is a risk that the document will not be received at all.

It is known to use infrared (IR) communication to transfer electronic documents from one portable computer to another during a meeting - e.g. the Apple^{®} Newton. However, compared with existing electronic communications devices, the (IR) data transfer rate between such machines is very slow: to beam a simple electronic document from one to another, users may need to stand within a few feet of each other and point the IR transmitters of their machines at each other for several minutes.

A further problem is that it is not possible to store large numbers of electronic documents on a portable, hand-held or wristwatch computer. This is the case with documents in, e.g., PostScript, but may be an even greater problem with scanned (bitmapped) documents.

A system for accessing or distributing electronic documents is disclosed which includs: a database of electronic documents and corresponding document references, and a plurality of objects, at least one of said objects preferably being portable or mobile, each object including means for communicating with the or each other object and with a user interface, and means for receiving, storing or transmitting a document reference corresponding to one of said electronic documents.

Further a portable device for accessing or distributing electronic documents is described which includs: means for communicating with fixed or mobile electronic devices and with a user interface, at least one of said devices including a database of electronic documents and corresponding document references, and means for receiving, storing or transmitting a document reference corresponding to one of said electronic documents.

Further an apparatus for scanning, copying and/or printing documents is provided which includs: means for accessing a database electronic documents, each electronic document having a corresponding document reference, means for communicating with one or more of a plurality of objects, at least one of said objects preferably being portable or mobile, and with a user interface, and means for receiving, storing or transmitting a document reference corresponding to one of said electronic documents.

Each document reference corresponds to a single electronic document, and a document may have any number (e.g., originating from different users) of corresponding document references. For a very small electronic document, the document reference may include the electronic document itself. However, as an example, the document reference suitably comprises a universal resource locator (URL) as defined in the Worldwide Web information system (see Berners-Lee T.J., Cailliau R., & Groff J.-F., The *Worldwide Web, Computer Networks and ISDN Systems 25* (1992), pp. 454-459. North-Holland; and Mangers J.J, *World-Wide Web, Mosaic and More* (1995), MGraw-Hill, London).

Each electronic document or document reference has a corresponding user interface (UI) representation. The UI representation of the electronic document may comprise in particular an icon or text on a graphical display, a sound, any combination of these, or, boadly, any real or ephemeral object capable of being selected by means of the user interface. The UI command language may be text- or menu-based, or natural language or direct interaction (as in the embodiment described herein), or may use any other suitable method (see Preece J., *Human Computer Interaction* (1994). Addison Wesley).

Alternatively the or each document reference for an electronic document may be invalidated or even absent (e.g. through deletion): the electronic document remains in the database, but remote access to it using document references/document satchel technology described herein is precluded.

It is the object of this invention to solve the problems associated with handling large documents on portable, hand-held or wrist watch computers.

This object is solved by the subject matter of the independent claims.

Preferred embodiments are the subject matters of the dependent claims.

The invention is particularly advantageous in that document references take up a comparatively small amount of storage space in memory, and their transmission from one (fixed or mobile) device to another may be accomplished very quickly.

The invention is advantageous, for example, for the worker who visits numerous sites where documents are to be given to him: instead of collecting a bundle of papers, he collects a string of documenst references in his portable device.

The present invention will now be described, by way of example, with reference to the accompanying drawings, in which:
Figure 1 is a view of the portable device according to one embodiment of the invention;
Figure 2 shows diagramatically the user interface and icons employed in one embodiment of the invention (a) for a user's workstation, and (b) for the user's portable device;
Figure 3 is a schematic illustration of an embodiment of the networked system according to the invention;
Figure 4 shows successive displays on the portable device of each user corresponding to the sequence in Fig. 3;
Figure 5 is a flow chart of the process (a) carried out in a portable device in exchanging a document token, (b) carried out in a portable device in updating the display thereof, and (c) carried out in a fixed object such as a printer or multifunction machine when a nearby user prints out a document; and
Figure 6 shows schematic representations of various procedures for distributing documents which are may be performed using the present invention.

The present invention is based upon PARCTab technology; and the system hardware is described in detail in: (1) Adams N., Gold R., Schilit B.N., Tso M. & Want R., (1993), An Infrared Network for Mobile Computers, in *Proc. USENIX Symposium on Mobile* & *Location-independent Computing,* pp. 41-52, Cambridge, MA:USENIX; and (2) Schilit B.N., Adams N., Gold R., Tso M., Want R., (1993), The PARCTab Mobile Computing System, in *Proc. 4th Workshop on Workstation Operating Systems (WWOS-IV),* pp.34-39, Napa, CA:IEEE.

The Tab is a form of personal digital assistant (PDA) - a small lightweight portable computer that can be attached to the belt, or carried in a handbag. In the following, the invention is described in particular in relation to the use of such Tabs; however, it will be appreciated that any suitable form of portable computer may be used, and the computer may take the form, for example and subject to design constraints, of a conventional wristwatch. An exemplary system, for transferring data such as document references to and from a wristwatch computer, is disclosed in British patent application No. 9425184.0.

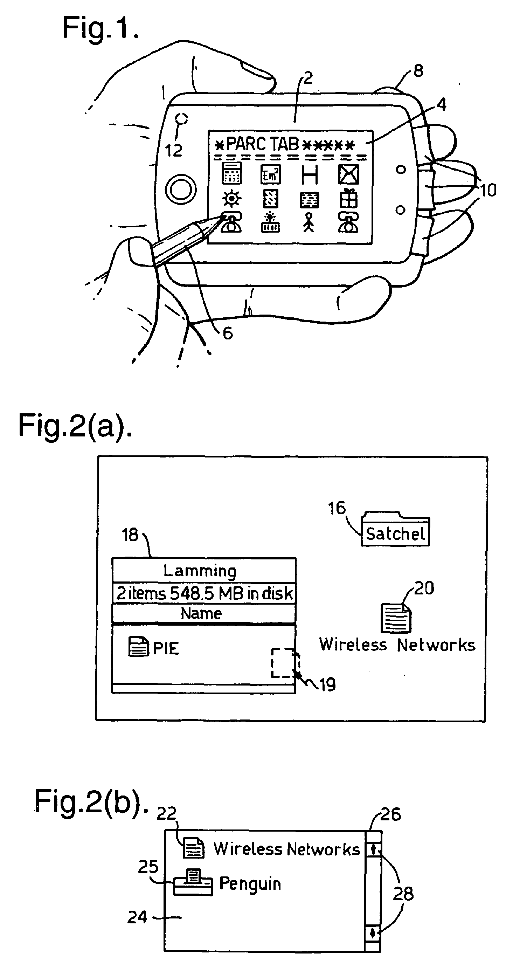

As can be seen in Fig. 1, the Tab 2 is equipped with a small bitmap screen 4 which is touch sensitive, enabling user inputs by means of finger tip or pointer 6. The Tab is also provided with 19.2 Kb/s bi-directional IR communications facilities (diode transmitter/receiver) 8, and three buttons 10. It will be appreciated that the wireless communication may alternatively be implemented by means of suitable radio technology well known in the art (see, e.g., Weiser M., The Computer for the 21st Century, *Scientific American,* September 1991, pp. 66-75). As a further alternative, any of the communications links referred to in the present disclosure which are provide by IR links may, where appropriate, be implemented by wired links. The Tab further includes a tone generator 12 for use, for example, in giving audible signals to the user. Within a building, users can carry their Tabs 2 from room to room while moving into and out of contact, or maintaining contact, with a network of stationary servers which provide a wide variety of services. As part of the Tab user interface, various icons 14 are displayed on the screen 4 to provide to the user access to such services, as is well known in the art (see Smith et al., Designing the Star User Interface, Byte 7(4) (1982), pp. 242-282).

The invention is implemented by employing a user interface (for example, on each Tab, and elsewhere) whereby the Tab emulates a document satchel. The notion of a satchel is that of a portable holder of documents, enabling transport of the documents to a remote location for later use, distribution, etc. Although in the following an electronic document will be said to be stored in a satchel, a feature of the present invention is that it is an document reference, which identifies the electronic document, which is received by, stored on, and transmitted by the Tab. In the following description, the document reference takes the form of an electronic token which uniquely corresponds to a document. The documents themselves may be stored on a file server, or on the user's personal workstation, on the network. In some cases the token may contain the document, e.g. when the document is very tiny. A typical database of stored documents and respective tokens is illustrated in Table 1. The tokens are shown as 8-bit codes for the purpose of illustration only; and it will be appreciated that the tokens may have any suitable format to suit a desired application.

**Table 1: Typical documents and tokens in a database.**

| Document | Token |
|---|---|
| 5000 Series machine specifications | 01011010 |
| 5045 Maintenance Manual | 01101001 |
| Agenda | 00101011 |
| ... | ... |
| ODP sales pie charts | 00010111 |
| 5053 Production schedule | 01011110 |

In any event, the token contains sufficient information for the system to locate the relevant document, as in the case of the above-mentioned URLs. A URL (uniform resource locator) is essentially a way for the World-Wide Webto specify where a particular resouce (e.g. document) is located on the Internet, while at the same time describing the tool that is required to access it and specifying the actual file's location on a particular internet host. The situation whereby files on a local machine may be embedded with subdirectories and may exists on different physical disk drives is true the Web also, except that all of this applies to a particular machine on the internet, of which there are hundreds of thousands. Since each machine's file locations differ widely, URLs are used to identify where they reside. In general URLs take the form:
http://www.ncsa.uiuc.edu/Mosaic/Demo/demo.html
Many resouce types are now available, including in particular f tp: for a FTP (File Transfer Protocol) server - the main method of moving files around on the internet. URLs allow a document to link with other services and documents on the internet.

As an alternative, the user interface may be fully or partially omitted from the PDAs, the PDAs in that case being designed, e.g., to reproduce a suitable user interface when in the vicinity of, and in communication with, a suitable device (e.g., workstation, printer, copier, fax machine, etc) having its own display. In such a case, the PDA may be programmed to emit a 'beep' from its tone generator to indicate transmission and/or receipt of a document; although here the person who has had an electronic 'document' sent to his PDA is unable immediately to determine what the document is.

Figure 2 shows diagramatically the user interface and icons employed in one embodiment of the invention (a) on the display of a user's workstation, and (b) on the display the user's portable device, so as to represent the contents of his satchel. It will be appreciated by a person skilled in the art that any user interface, icons and/or process for transferring documents from the electronic desktop over the IR link may be employed.

Electronic documents may placed into the user's satchel using his personal workstation, e.g. a Macintosh. Satchel owners have on their electronic desktop (Fig. 2(a)) a special small folder icon 16 called the Satchel folder, and this preferably has a special icon to distinguish it from other folders on the desktop. The satchel folder behaves just like any other folder, and the open Satchel window is shown at 18, including the user's name and a list of items in the satchel. An exception compared with other folders is that any document 20 dragged into the folder 18 by a user (e.g. using a conventional mouse to move a pointer 19) automatically initiates a data transfer operation (between the workstation and the user's Tab, e.g. by means of IR communication as discussed above) which results in the icon 22 of the document appearing in the satchel display 24 on the Tab. The information transmitted over the IR link includes the icon type, document name, and the corresponding token, the token being stored in the satchel's (Tab's) memory. It will be appreciated that such a data transfer operation may be accomplished in many other ways, e.g. by simply typing in a command on a keyboard. In one embodiment, a reference to a whole folder, filesystem or network of URLs may be transferred.

The satchel's user interface is implemented in such a way that the satchel contents are displayed on the screen (Fig. 2(b)) as a series of one line entries, each line corresponding to a document token and including a small icon and the name of the document. Down the right hand edge of the display is a scroll bar 26 enabling a user to scroll up or down by pressing (e.g. a pen) on the appropriate arrow 28 of the scroll bar, until the desired entry is found.

In a similar manner, any document appearing on the Tab satchel screen 24 automatically appears in the satchel folder 18 on the the user's desktop, provided the Tab has been within range of an IR transceiver coupled to his workstation, so as to enable the relevant satchel contents data to be downloaded to the workstation. From there, documents in the satchel folder can be opened and edited *in situ,* or they can be dragged out of the the satchel folder and onto the desktop.

Because the satchel (Tab) uses an IR wireless communications system it is easy to discover which other IR-linked devices are within its line of sight. The PARCtab network disclosed in the above-mentioned references (1) & (2) includes IR gateways, one per room, that provide the satchels with a link to the cable network services upon which they rely. However, any suitable location technique can be used to determine where the satchel is. Consequently, each satchel is context-sensitive: each one knows which room it is in at any instant, and which other satchels or IR-linked devices (e.g. printers) are there with it.

Each satchel (Tab) presents this context information to the user, and it takes the form of additional entries on the satchel screen. These entries are not input by the user, but pop up automatically as the user moves around the building carrying his satchel. So, for example, when Mike meets Richard, an entry representing Richard appears in Mike's satchel, and a corresponding entry representing Mike appears on Richard's. Similarly, when Mike is in the same room as a printer, an entry (icon 25 + name) showing the name of the printer appears in his satchel (see Fig. 2(b)). These pop-up entries provide a streamlined way for users to pass documents to eachother, or to exchange them with nearby devices.

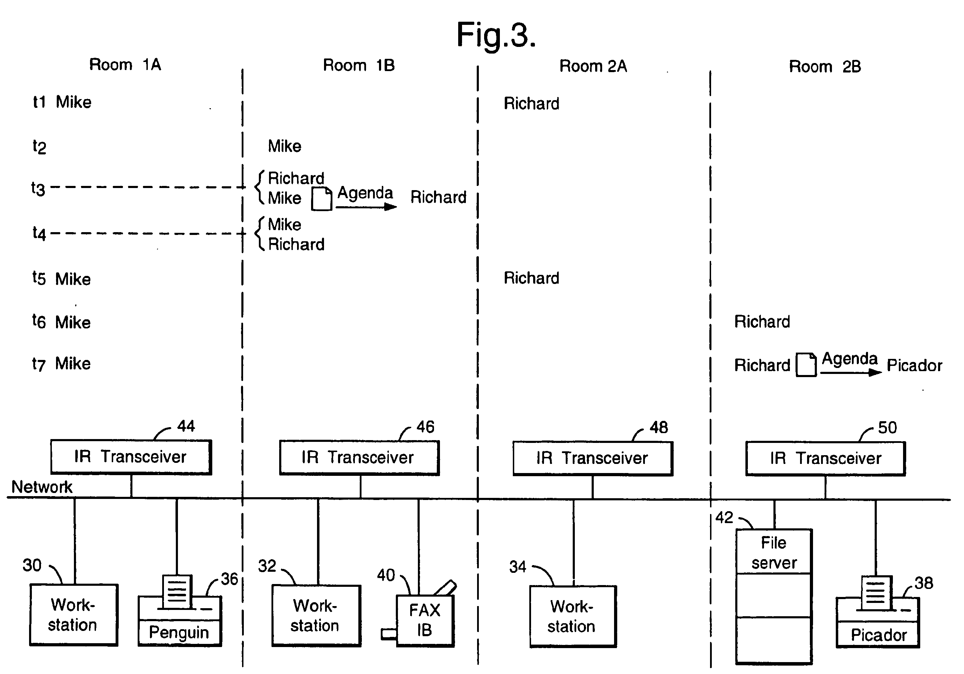

Referring to Fig. 3, there is shown schematically a networked system for implementing the present invention, and a sequential procedure by which a document is distributed using document satchels. Connected on a conventional network (e.g. ethernet) are a number of electronic devices, such as workstations 30, 32, 34, printers, 36, 38, fax machine 40, and file server 42, these devices being referred to generally as "objects". For the purpose of illustration, that part of the network connecting four rooms is shown; and, for example, rooms 1A. 1B may be in a first building, while rooms 2A, 2B may be in a second building, remote from the first.

In each room 1A-2B at least one IR transceiver 44,46,48,50 is used to provide communication between any Tabs present in the room and the network (see the above-mentioned Schilit *et al.* references). Alternatively, any of the objects 30-42 may be provided with its own IR transceiver for communication with Tabs. Consequently, room 1A contains workstation 30, printer 36 and transceiver 44; room 2B contains file server 42, printer 38 and transceiver 50, and so on.

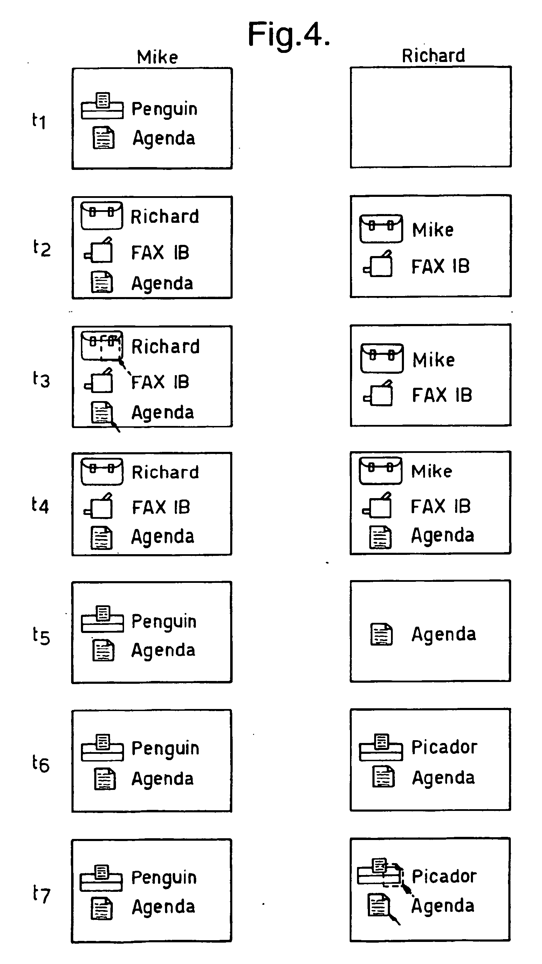

In Fig. 3, the document distribution process is illustrated by showing the positions of the Tabs of two people, Mike and Richard, and the operations which are performed, at intervals before and after their meeting in one of the rooms. The displays on Mike and Richard's Tabs at the instants t₁-t₇ during the process of Fig. 3 are shown in Fig. 4.

At time t₁, Mike is in room 1A (his office) and Richard is in room 2a. As shown in Fig. 4, Mikes satchel contains the (icon for the) document "Agenda" (and therefore has its token stored in its memory), and the icon for his printer (called "Penguin") 36, which appears automatically since printer 36 is located in room 1A. Next, at time t₂, Mike and Richard meet in room 1B: the icon for the Penguin printer has automatically disappeared from his satchel display; and the icon for Richard's satchel appears in Mike's satchel, and the icon for Mike's satchel appears in Richard's satchel. In addition, the icon for the fax machine 40 automatically appears in both satchels.

At time t₃, Mike decides to pass a copy of the electronic document "Agenda" to Richard. (If, say, Mike does not have the document he wants to pass on in his satchel, he may employ a memory aid and information retrieval system provided on his Tab, as disclosed in published European patent application EP-A-637,807, corresponding to U.S. application S.N. 08/279,961, in order to locate the document be wants and retrieve it's token.) To pass a copy of the electronic document "Agenda" to Richard, Mike simply selects the document icon on the touch screen of his tab using a pen or the like, and copies the icon onto Richard's satchel icon. This initiates a process wherein the digital token (see Table 1) for "Agenda" is beamed over the IR link from Mike's Tab to Richard's Tab. (The time taken for this will depend on the communication protocol used, the use of security encryption, and the size of the token, but in any event is likely to be a very small fraction of the time which would be needed to transfer the entire document via the same link, and typically the time taken will be a fraction of a second.) Thus the token for "Agenda" is stored on Richard's Tab for later distribution or use. When this operation is completed (t₄), the icon for "Agenda" also appears on the screen of Richard's Tab: it is now in his personal satchel.

Next (t₅), Mike returns to room 1A and his satchel display reverts to that existing at t₁, which is described above. At the same time (say), Richard returns to room 2A: the icons for Mike's satchel and Fax 1B have automatically disappeared from his Tab screen, so that the only item left in his satchel is the document "Agenda" (Fig. 4). Richard now decides that he would like to print out "Agenda", but doesn't have a printer in his office. At t₆, therefore, he walks into room 2B in the same building which houses the printer 38 called "Picador". The icon for Picador automatically appears as an entry on Richard's Tab screen as a result of the IR communication and object sensing procedure discussed above.

To print out "Agenda", Richard, at time t₇, simply moves (using a pen to move the pointer on his touch screen) a copy of the icon for "Agenda" onto the Picador icon. As a result, an IR signal is beamed from Richard's Tab to the transceiver 50, or to Picador's own IR transceiver, the signal including the digital token for "Agenda". Using the token, the electronic document "Agenda" is fetched from the database in which is stored (e.g. file server 42; but it may be from any location on the network), or is accessed from Mike's workstation 30, and then printed out on Picador. In one embodiment, Picador may be a "confidential" printer, in which case the document is not printed straight away, but the print operation is deferred. Then, the next time Richard is in the vicinity of Picador, Richard's TAB and Picador sense this (via IR communication); the print operation is commenced by Picador; and Richard's TAB emits an audible 'beep' to tell him to collect the freshly printed document immediately upon printing.

In an alternative embodiment, Richard may submit the document "Agenda" for a third party service (e.g. OCR, summarising, and/or translation service) available on the network; and suitably this is achieved by dragging and dropping the icon for "Agenda" onto a corresponding icon for that service on the TAB screen.

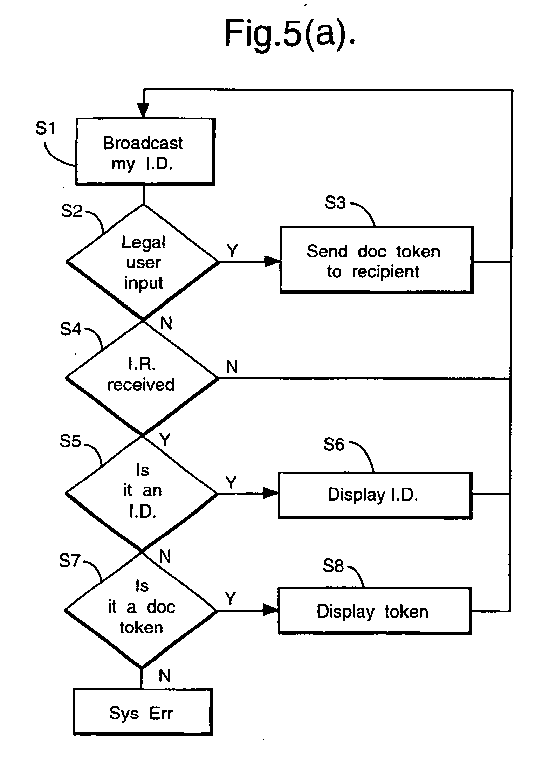

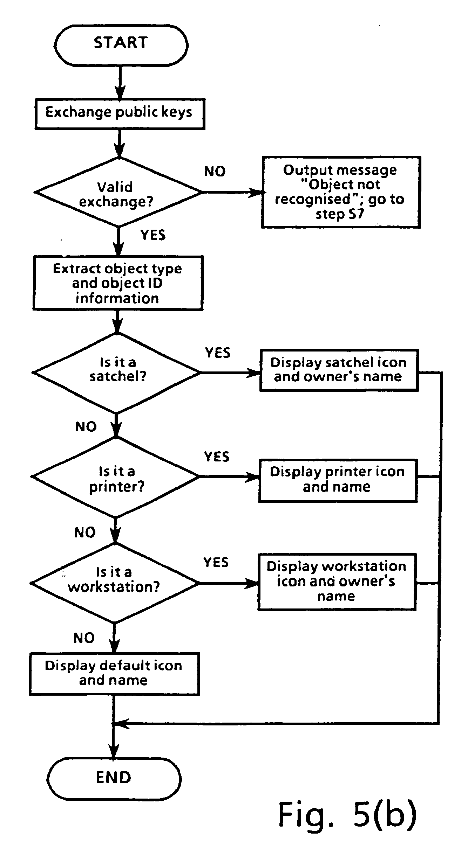

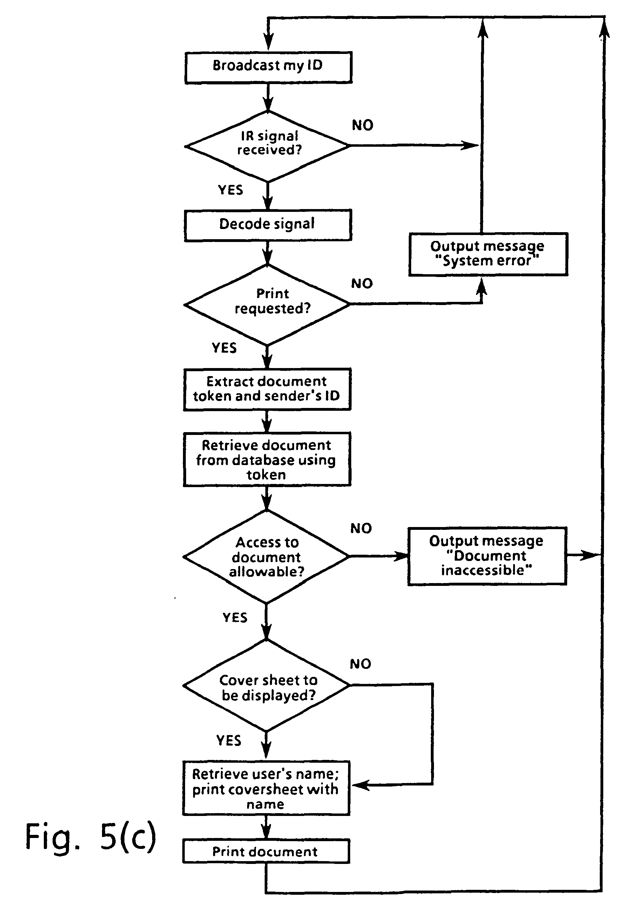

Figure 5 shows a flow chart of the processing carried out in each Tab during an encounter with another Tab or IR-linked object. In step S1 the Tab broadcasts, or initiates the broadcast of, the tab user's identity code to the environment. (This code may be encrypted using shared key technology which is known in the art.) Next, at step S2, the software checks for a legal (valid) user input (in this example, the user copying a document icon to another satchel, or other object, using the touchscreen). If such a legal input is made, the document token is transmitted by IR to the recipient at step S3, and the processing returns to step S1. (The token transmission may include encryption using shared key technology which is known in the art, i.e. anything which has been encrypted with a user's private key can only be decrypted using the public key corresponding to that private key.)

If no such legal input is entered, the software checks at step S4 to see whether any IR signal (e.g. satchel or printer ID, or document token) has been received. If none has been received the processing returns to step S1.

If an IR signal has been received, the software then checks (step S5) to see whether it is an ID (e.g., another satchel). If so, then the received ID is displayed on the tab screen, at step S6, i.e. satchel icon + that satchel user's name. (Again this ID code may need to be decrypted using shared key technology which is known in the art.). The processing then returns to step S1.

If the signal is not an ID, then the software next checks at step S7 whether the received IR signal is a document token. If not, then there is a system error, and this is indicated on the Tab screen. If the received IR signal is a document token, then the document corresponding to the token (i.e. icon + document name) are displayed (step S8) on the tab screen. (Again this ID code may need to be decrypted using shared key technology which is known in the art.). The processing then returns to step S1.

Figure 5(b) is a schematic flow chart of the process carried out in a portable device, in one embodiment of the invention, in updating the display thereof. Figure 5(c) is a schematic flow chart of the process carried out in a fixed object such as a printer or multifunction machine, in one embodiment of the invention, when a nearby user prints out a document.

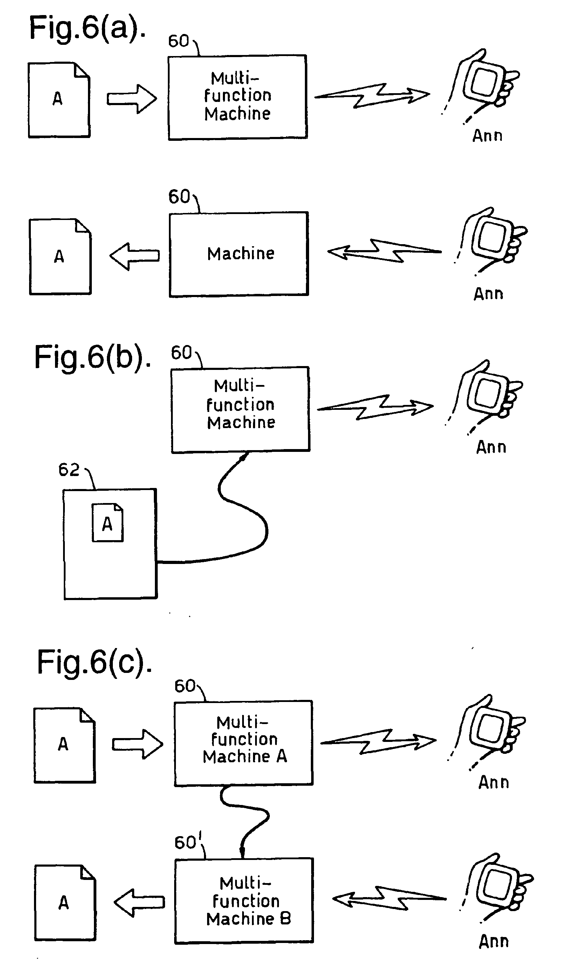

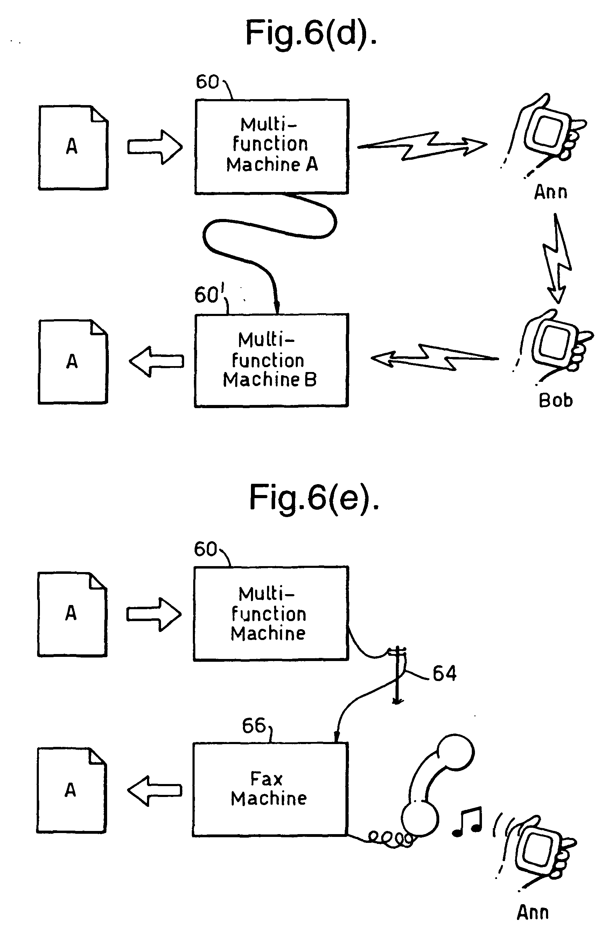

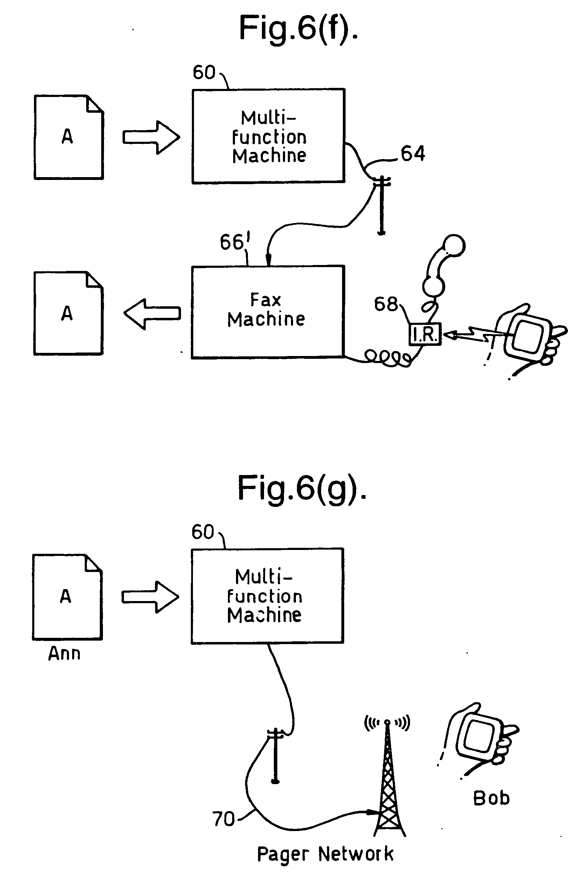

Figure 6 shows schematic representations of various procedures for distributing documents which may be performed using the present invention. In Fig. 6, item 60 is a multifunction machine equipped with IR communication facilities for wirelessly communicating with tabs, base stations in rooms, and any of the other objects mentioned above which are within range of its IR transmitter at a given time, the machine 60 also being hooked up to the network (see Fig. 3) so as to facilitate rapid transfer of electronic documents between itself and any number of other similar machines 60 or other objects on the network. The machine 60 may for example provide any combination of the functions of scanning, copying, faxing and printing, as is known in the art.

As can be seen in Fig. 6(a), document A is initially scanned by the multifunction machine 60 and its corresponding token is beamed by IR to Ann's Tab, and the relevant icon entry appears in her satchel. Some time later (e.g. when document A is not available), Ann beams the token to the machine 60 (by means of the icon-dragging process described above in relation to Figs 3 and 4, and the machine automatically prints out document A.

In Fig. 6(b), the document A has been created on a user's conventional workstation 62. The user then sends the electronic document to the multifunction machine 60, which then beams by IR the corresponding token to Ann's Tab.

Referring to Fig. 6(c), here two multifunction machines 60, 60' are coupled on a network. Initially document A is scanned in on machine 60 which beams the token to Ann's tab, as in Fig. 6(a). Some time later and, for example at a remote location, Ann decides she wants a hard copy of document A. She simply beams the token to nearby machine 60' (as described with reference to Fig. 6(a)); machine 60' thereupon retrieves the electronic document A over the network from machine 60 or an associated file server (not shown), and then prints out the document.

- The distribution and printing of a document (A) is again illustrated in Fig. 6 (d). The process is the same as in Fig. 6 (c), except that the token is beamed from Ann to Bob for the latter to print out the document A on the second machine 60'. In an alternative embodiment, the token for document A may be characterised such that A nn is able to receive and transmit it, but not to obtain access to the document itself, e.g. by printing. In this way, Ann is able to 'trade' in a document which is inaccessable to her: she can thus act as a courier for confidential documents.

In Fig. 6(e), the case where the Tab owner is not in the vicinity of a multifunction machine is illustrated: here the machine is linked to a fax machine 66 over the telephone network 64. The document A has been scanned in and stored electronically in a database by machine 60. Later, Ann is at a location where she needs a hard copy of document A and has access to fax machine 66. Using the fax machine she dials up the multifunction machine 60 and, upon gaining access, she operates her Tab to transmit a tone signal down the telephone representing the token for document A and commanding the machine 60 to transmit document A to the fax machine 66. The machine promptly accesses the electronic document A and sends it down the telephone line to the fax machine 66 where it is printed out.

The same operation is illustrated in Fig. 6(f), with the exception that in this case the fax machine 66' is equipped with its own IR transceiver 68, enabling the token for document A to be beamed by IR from Ann's Tab to the transceiver 68 and then electronically conveyed from the fax machine 66' to the multifunction machine 60.

The embodiment illustrated in Fig. 6(g) makes use of radiopaging technology. Bob is equipped with a radiopager, or a Tab which emulates a radiopager, and while away from his office contacts Ann to let her know that he requires a copy of document A. Ann scans in document A in the multifunction machine 60, and then commands the machine to transmit the token for document A over the pager network 70 to Bob's pager (Tab). Bob is then able to go to any printer, fax, etc adapted to receive such tokens, and to print out a copy of document A.

Numerous futher embodiments will be apparent to persons skilled in the art. For example, the satchel may be implemented using a (GSM) portable telephone coupled to a PCMCIA cellular data card which can be plugged into a palmtop or notebook computer. Alternatively, the satchel functionality may be incorporated into a pager or mobile phone.

## Claims

1. A portable electronic document reference transport device (2) for transporting an electronic document reference between a first location (Room 1A) and a second location (Room 2B), the electronic document reference identifying a location of an associated electronic document (Agenda) in a first memory (42), the electronic document having a first memory storage requirement greater than a second memory storage requirement of the electronic document reference, the portable electronic document reference transport device (2) comprising:
a) a second memory storing the electronic document reference, the second memory having a capacity significantly less than a capacity of the first memory; and
b) a transceiver (8) coupled to the second memory for receiving the electronic document reference without its associated electronic document from a distributed document handling system (30, 32, 34, 36, 38, 40, 42, 44, 46, 48, 50) at a first location (Room 1A) and transmitting the electronic document reference without its associated electronic document to the distributed document handling system (30, 32, 34, 36, 38, 40, 42, 44, 46, 48, 50) at a second location (Room 2B), the distributed document handling system (30, 32, 34, 36, 38, 40, 42, 44, 46, 48, 50) being coupled to the first memory and responding to receipt of the electronic document reference by producing a copy of the associated electronic document at a third location (38), the distributed document handling system (30, 32, 34, 36, 38, 40, 42, 44, 46, 48, 50) and the first memory being physically separate from the portable electronic document reference transport device (2).

2. The portable electronic document reference transport device (2) of claim 1 wherein the transceiver is an infrared transceiver (8).

3. The portable electronic document reference transport device (2) of claim 1 or 2 further comprising:
c) a display unit (4) and a graphical user interface for indicating to a user identities of electronic document references (18) stored by the portable electronic document reference transport device (2).

4. A system for communicating with a portable electronic document reference transport device (2) of one of claims 1 to 3, the portable electronic document reference transport device (2) having a memory for storing document references, said system comprising:
a wire-based network for providing a communications link between devices (30, 32, 34, 36, 38, 40, 42) coupled thereto;
a transceiver (44, 46, 48, 50) coupled to said wire-based network for establishing a wireless communications link with the portable electronic document reference transport device (2) and devices (30, 32, 34, 36, 38, 40, 42) coupled to said wire-based network;
a subsystem (42) coupled to said wire-based network and communicating with said transceiver (44, 46, 48, 50); said subsystem (42) being adapted to operate a database that associates electronic document references with electronic documents; each electronic document reference identifying a location of a single electronic document stored in a memory on a device (30, 32, 34, 42) operating on said wire-based network; said subsystem (42) receiving, from said transceiver (44, 46, 48, 50), a communication originating from the portable electronic document reference transport device (2); the communication including an electronic document reference that is associated with a selected electronic document and a request for a service provided by a device (36, 38, 40) coupled to the wire-based network that is to be performed on the selected electronic document.

5. The system according to claim 4, wherein the communication said subsystem (42) receives from said transceiver (44, 46, 48, 50) is context sensitive.

6. The system according to claim 5, wherein the context sensitive communication said subsystem (42) receives from said transceiver (44, 46, 48, 50) identifies a device (36, 38, 40) on which to perform the requested service.

7. The system according to one of claims 4 to 6, wherein each electronic document reference specifies a host file server (42) and location on the host file server (42) of an electronic document and wherein electronic documents of associated document references are stored on the host file server (42) coupled to said wire-based network.

8. The system according to one of claims 4 to 7, wherein the service provided by the device coupled to the wire-based network is a fax service (40), a print service (36, 38), a summarising service, a translation service or an optical character recognition service.

9. The system according to one of claims 4 to 8, further comprising a fax machine (40) or a printer (36, 38) coupled to said network for creating hardcopies of the selected electronic document associated with the electronic document reference.

10. The system of claim 9 wherein the distributed document handling (30, 32, 34, 36, 38, 40, 42, 44, 46, 48, 50) system includes a printer (36, 38) or a fax (40) for printing hard copies of electronic documents in response to receipt of the associated electronic document reference.

11. The system according to one of claims 4 to 10, further comprising a scanner (60) coupled to said network for creating electronic documents from hardcopies and associating each electronic document with an electronic document reference.

12. The system according to one of claims 4 to 11, wherein said transceiver (44, 46, 48, 50) is an infrared transceiver (44, 46, 48, 50).

13. The system according to one of claims 4 to 12, wherein said transceiver (44, 46, 48, 50) communicates with the portable electronic document reference transport device (2) over a paging network (70), a public telephone network (64) or a GSM mobile network.

14. The system according to one of claims 4 to 13, wherein the communication originating from the portable electronic document reference transport device (2) is authenticated using shared keys.

15. The system according to one of claims 4 to 14, wherein the memory available on the portable electronic document reference transport device (2) is significantly less than the memory available on devices (30, 32, 34, 36, 38, 40, 42), which are coupled to said wire-based network, for storing electronic documents.

16. The system of claim 4 wherein the subsystem (42) includes an optical character recognition unit for generating an electronic document from a hard copy document, the electronic document having an associated document representation which the optical character recognition unit is capable of transmitting.

17. The system of claim 4 or 16 wherein the subsystem (42) includes a personal computer for processing an electronic document in response to receipt of an associated electronic document reference.

18. The distributed system of one of claims 4, 16 or 17 wherein the portable electronic document reference transport device (2) also indicates identity of portions of the subsystem.

19. A method for a portable electronic document reference transport device (2) of receiving and distributing electronic document references within a distributed system (30, 32, 34, 36, 38, 40, 42, 44, 46, 48, 50) including a database (42) and a distributed document handling system, the database (42) storing electronic documents and electronic document references, each electronic document reference indicating a location of the associated electronic document in a first memory, each electronic document reference having a first memory storage requirement less than a second memory storage requirement of the associated electronic document, the portable electronic document reference transport device (2) being physically separate from the first memory, the portable electronic document reference transport device (2) including a second memory having a capacity significantly less than a capacity of the first memory, the distributed document handling system (30, 32, 34, 36, 38, 40, 42, 44, 46, 48, 50) being coupled to the database (42) and having a transceiver (44, 46, 48, 50) for receiving and transmitting electronic document references without their associated electronic documents, the portable electronic document reference transport device (2) being physically separate from both the database (42) and the distributed document handling system (30, 32, 34, 36, 38, 40, 42, 44, 46, 48, 50), the method comprising the steps of:
a) determining whether a command has been received from a user of the portable electronic document reference transport device (2);
b) if the user command has been received, transmitting a first electronic document reference without its associated electronic document to the distributed document handling system (30, 32, 34, 36, 38, 40, 42, 44, 46, 48, 50);
c) determining whether a second electronic document reference without its associated electronic document has been received from the distributed document handling system (30, 32, 34, 36, 38, 40, 42, 44, 46, 48, 50); and
d) if the second electronic document reference has been received indicating to the user a presence of the second electronic document reference.

20. The method of claim 19 further comprising the steps of:
e) transmitting a first identifier to identify the portable electronic document reference transport device (2).

21. The method of claim 19 or 20 further comprising the steps of:
f) determining whether a second identifier for a device capable of exchanging electronic document references has been received; and
g) if the second identifier has been received indicating to a user the second identifier.

## Patentansprüche

1. Tragbares Gerät (2) zum Transportieren einer Referenz eines elektronischen Dokuments, das angepasst ist, eine Referenz eines elektronischen Dokuments zwischen einem ersten Ort (Room 1A) und einem zweiten Ort (Room 2B) zu transportieren, wobei die Referenz eines elektronischen Dokuments einen Ort eines verbundenen elektronischen Dokuments (Agenda) in einem ersten Speicher (42) kennzeichnet, das elektronische Dokument einen ersten Speicherbedarf hat, der größer als ein zweiter Speicherbedarf der Referenz des elektronischen Dokuments ist, wobei das tragbare Gerät (2) zum Transportieren einer Referenz eines elektronischen Dokuments umfasst:
a) einen zweiten Speicher, der die Referenz des elektronischen Dokuments speichert, wobei der zweite Speicher eine Kapazität hat, die wesentlich kleiner als eine Kapazität des ersten Speichers ist; und
b) einen mit dem zweiten Speicher verbundenen Sende-Empfänger (8) zum Empfangen der Referenz des elektronischen Dokuments ohne das damit verbundene elektronische Dokument von einem System (30, 32, 34, 36, 38, 40, 42, 44, 46, 48, 50) zum Behandeln verteilter Dokumente an einem ersten Ort (Room 1A) und zum Senden der Referenz des elektronischen Dokuments ohne das damit verbundene elektronische Dokument zum System (30, 32, 34, 36, 38, 40, 42, 44, 46, 48, 50) zum Behandeln verteilter Dokumente an einem zweiten Ort (Room 2B), wobei das System (30, 32, 34, 36, 38, 40, 42, 44, 46, 48, 50) zum Behandeln verteilter Dokumente mit dem ersten Speicher verbunden ist, und auf den Empfang der Referenz des elektronischen Dokuments durch das Erzeugen einer Kopie des damit verbundenen elektronischen Dokuments an einem dritten Ort (38) antwortet, wobei das System (30, 32, 34, 36, 38, 40, 42, 44, 46, 48, 50) zum Behandeln verteilter Dokumente und der erste Speicher vom tragbaren Gerät (2) zum Transportieren einer Referenz eines elektronischen Dokuments physisch getrennt sind.

2. Tragbares Gerät (2) zum Transportieren einer Referenz eines elektronischen Dokuments gemäß Anspruch 1, wobei der Sende-Empfänger ein Infrarot-Sende-Empfänger (8) ist.

3. Tragbares Gerät (2) zum Transportieren einer Referenz eines elektronischen Dokuments gemäß Anspruch 1 oder 2, weiterhin umfassend:
c) eine Anzeigeeinheit (4) und eine graphische Benutzeroberfläche zum Anzeigen der Identitäten von im tragbaren Gerät (2) zum Transportieren einer Referenz eines elektronischen Dokuments gespeicherten Referenzen (18) elektronischer Dokumente zu einem Benutzer.

4. System zum Kommunizieren mit einem tragbaren Gerät (2) zum Transportieren einer Referenz eines elektronischen Dokuments gemäß einem der Ansprüche 1 bis 3, wobei das tragbare Gerät (2) zum Transportieren einer Referenz eines elektronischen Dokuments einen Speicher zum Speichern von Dokumentreferenzen umfasst, wobei das System umfasst:
ein drahtgebundenes Netzwerk zum Bereitstellen einer Kommunikationsverbindung zwischen Geräten (30, 32, 34, 36, 38, 40, 42), die mit dem drahtgebundenen Netzwerk verbunden sind;
einen mit dem drahtgebundenen Netzwerk verbundenen Sende-Empfänger (44, 46, 48, 50) zum Aufbauen einer drahtlosen Kommunikationsverbindung mit dem tragbaren Gerät (2) zum Transportieren einer Referenz eines elektronischen Dokuments und den Geräten (30, 32, 34, 36, 38, 40, 42), die mit dem drahtgebundenen Netzwerk verbunden sind;
ein Subsystem (42), das mit dem drahtgebundenen Netzwerk verbunden ist, und mit dem Sende-Empfänger (44, 46, 48, 50) kommuniziert; wobei das Subsystem (42) angepasst ist, eine Datenbank zu betreiben, die Referenzen elektronischer Dokumente mit elektronischen Dokumenten verbindet; wobei jede Referenz eines elektronischen Dokuments einen Ort eines einzigen elektronischen Dokuments kennzeichnet, das in einem Speicher in einem auf dem drahtgebundenen Netzwerk funktionierenden Gerät (30, 32, 34, 42) gespeichert ist, wobei das Subsystem (42) vom Sende-Empfänger (44, 46, 48, 50) eine Kommunikation empfängt, die vom tragbaren Gerät (2) zum Transportieren einer Referenz eines elektronischen Dokuments stammt; wobei die Kommunikation eine Referenz eines elektronischen Dokuments umfasst, die mit einem ausgewählten elektronischen Dokument verbunden ist, und eine Anforderung eines durch ein mit dem drahtgebundenen Netzwerk verbundenes Gerät (36, 38, 40) bereitgestellten Dienstes, der auf dem ausgewählten elektronischen Dokument ausgeführt werden soll.

5. System gemäß Anspruch 4, wobei die Kommunikation, die das Subsystem (42) vom Sende-Empfänger (44, 46, 48, 50) empfängt, kontextempfindlich ist.

6. System gemäß Anspruch 5, wobei die kontextempfindliche Kommunikation, die das Subsystem (42) vom Sende-Empfänger (44, 46, 48, 50) empfängt, ein Gerät (36, 38, 40) kennzeichnet, auf dem der angeforderte Dienst ausgeführt werden soll.

7. System gemäß einem der Ansprüche 4 bis 6, wobei jede Referenz eines elektronischen Dokuments einen Host-File-Server (42) und einen Ort eines elektronischen Dokuments im Host-File-Server (42) spezifiziert, und elektronische Dokumente der damit verbundenen Dokumentreferenzen im Host-File-Server (42), der mit dem drahtgebundenen Netzwerk verbunden ist, gespeichert sind.

8. System gemäß einem der Ansprüche 4 bis 7, wobei der durch das mit dem drahtgebundenen Netzwerk verbundene Gerät bereitgestellte Dienst ein Faxdienst (40), ein Druckdienst (36, 38), ein Zusammenfassungsdienst, ein Übersetzungsdienst oder ein Dienst zur optischen Erkennung von Drucktypen ist.

9. System gemäß einem der Ansprüche 4 bis 8, weiterhin umfassend ein Faxgerät (40) oder einen Drucker (36, 38), die mit dem Netzwerk verbunden sind, zum Kreieren von Ausdrucken des ausgewählten elektronischen Dokuments, das mit der Referenz des elektronischen Dokuments verbunden ist.

10. System gemäß Anspruch 9, wobei das System (30, 32, 34, 36, 38, 40, 42, 44, 46, 48, 50) zum Behandeln verteilter Dokumente einen Drucker (36, 38) oder ein Faxgerät (40) zum Ausdrucken von Ausdrucken der elektronischen Dokumente als Antwort auf den Empfang der damit verbundenen Referenz des elektronischen Dokuments umfasst.

11. System gemäß einem der Ansprüche 4 bis 10, weiterhin umfassend einen Scanner (60), das mit dem Netzwerk verbunden ist, zum Kreieren von elektronischen Dokumenten aus den Ausdrucken, und Verbinden jedes elektronischen Dokuments mit einer Referenz des elektronischen Dokuments.

12. System gemäß einem der Ansprüche 4 bis 11, wobei der Sende-Empfänger (44, 46, 48, 50) ein Infrarot-Sende-Empfänger (44, 46, 48, 50) ist.

13. System gemäß einem der Ansprüche 4 bis 12, wobei der Sende-Empfänger (44, 46, 48, 50) mit dem tragbaren Gerät (2) zum Transportieren der Referenz eines elektronischen Dokuments über ein Funkrufnetzwerk (70), ein öffentliches Telefonnetzwerk (64) oder ein GSM-Mobilfunknetzwerk kommuniziert.

14. System gemäß einem der Ansprüche 4 bis 13, wobei die vom tragbaren Gerät (2) zum Transportieren einer Referenz eines elektronischen Dokuments stammende Kommunikation mittels verteilter Schlüssel identifiziert wird.

15. System gemäß einem der Ansprüche 4 bis 14, wobei der im tragbaren Gerät (2) zum Transportieren einer Referenz eines elektronischen Dokuments verfügbare Speicher wesentlich kleiner als der in den mit dem drahtgebundenen Netzwerk verbundenen Geräten (30, 32, 34, 36, 38, 40, 42) verfügbare Speicher zum Speichern elektronischer Dokumente ist.

16. System gemäß Anspruch 4, wobei das Subsystem (42) eine Einheit zur optischen Erkennung von Drucktypen aufweist, die angepasst ist, ein elektronisches Dokument aus einem Ausdruckdokument zu generieren, wobei das elektronische Dokument eine damit verbundene Dokumentdarstellung umfasst, die die Einheit zur optischen Erkennung von Drucktypen fähig ist, zu senden.

17. System gemäß Anspruch 4 oder 16, wobei das Subsystem (42) einen persönlichen Computer zum Verarbeiten eines elektronischen Dokuments als Antwort auf den Empfang einer damit verbundenen Referenz des elektronischen Dokuments umfasst.

18. Verteiltes System gemäß einem der Ansprüche 4, 16 oder 17, wobei das tragbare Gerät (2) zum Transportieren einer Referenz eines elektronischen Dokuments auch eine Identität von Teilen des Subsystems angibt.

19. Verfahren in einem tragbaren Gerät (2) zum Transportieren einer Referenz eines elektronischen Dokuments zum Empfangen und Verteilen von Referenzen elektronischer Dokumente innerhalb eines verteilten Systems (30, 32, 34, 36, 38, 40, 42, 44, 46, 48, 50) umfassend eine Datenbank (42) und ein System zum Behandeln verteilter Dokumente, wobei die Datenbank (42) elektronische Dokumente und Referenzen elektronischer Dokumente speichert, jede Referenz eines elektronischen Dokuments einen Ort des damit verbundenen elektronischen Dokuments in einem ersten Speicher kennzeichnet, wobei jede Referenz eines elektronischen Dokuments einen ersten Speicherbedarf hat, der kleiner als ein zweiter Speicherbedarf des damit verbundenen elektronischen Dokuments ist, wobei das tragbare Gerät (2) zum Transportieren einer Referenz eines elektronischen Dokuments vom ersten Speicher physisch getrennt ist, das tragbare Gerät (2) zum Transportieren einer Referenz eines elektronischen Dokuments einen zweiten Speicher umfasst, der eine Kapazität hat, die wesentlich kleiner als eine Kapazität des ersten Speichers ist, wobei das System (30, 32, 34, 36, 38, 40, 42, 44, 46, 48, 50) zum Behandeln verteilter Dokumente mit der Datenbank (42) verbunden ist, und einen Sende-Empfänger (44, 46, 48, 50) zum Empfangen und Senden von Referenzen elektronischer Dokumente ohne die damit verbundenen elektronischen Dokumente umfasst, wobei das tragbare Gerät (2) zum Transportieren einer Referenz eines elektronischen Dokuments von sowohl der Datenbank (42) als auch dem System (30, 32, 34, 36, 38, 40, 42, 44, 46, 48, 50) zum Behandeln verteilter Dokumente physisch getrennt ist, wobei das Verfahren folgende Schritte umfasst:
a) Bestimmen, ob ein Kommando von einem Benutzer des tragbaren Geräts (2) zum Transportieren einer Referenz eines elektronischen Dokuments empfangen wurde oder nicht;
b) Wenn das Kommando vom Benutzer empfangen wurde, Senden einer ersten Referenz eines elektronischen Dokuments ohne das damit verbundene elektronische Dokument zum System (30, 32, 34, 36, 38, 40, 42, 44, 46, 48, 50) zum Behandeln verteilter Dokument;
c) Bestimmen, ob eine zweite Referenz eines elektronischen Dokuments ohne das damit verbundene elektronische Dokument vom System (30, 32, 34, 36, 38, 40, 42, 44, 46, 48, 50) zum Behandeln verteilter Dokumente empfangen wurde, oder nicht; und
d) Wenn die zweite Referenz des elektronischen Dokuments empfangen wurde, den Benutzer auf das Vorhandensein der zweiten Referenz des elektronischen Dokuments hinweisen.

20. Verfahren gemäß Anspruch 19, weiterhin umfassend die Schritte:
e) Senden einer ersten Kennung zum Kennzeichnen des tragbaren Geräts (2) zum Transportieren einer Referenz eines elektronischen Dokuments.

21. Verfahren gemäß Anspruch 19 oder 20, weiterhin umfassend die Schritte:
f) Bestimmen, ob eine zweite Kennung für ein Gerät, das fähig ist, Referenzen elektronischer Dokumente auszutauschen, empfangen wurde oder nicht;
g) wenn die zweite Kennung empfangen wurde, den Benutzer auf die zweite Kennung hinweisen.

## Revendications

1. Dispositif portable de transport de référence de document électronique (2) permettant de transporter une référence de document électronique entre un premier emplacement (pièce 1A) et un deuxième emplacement (pièce 2B), la référence de document électronique identifiant un emplacement d'un document électronique associé (Agenda) dans une première mémoire (42), le document électronique ayant une exigence de stockage dans une première mémoire supérieure à une exigence de stockage dans une seconde mémoire de la référence de document électronique, le dispositif portable de transport de référence de document électronique (2) comprenant :
a) une seconde mémoire stockant la référence de document électronique, la seconde mémoire ayant une capacité très inférieure à une capacité de la première mémoire ; et
b) un émetteur-récepteur (8) couplé à la seconde mémoire permettant de recevoir la référence de document électronique sans son document électronique associé à partir d'un système distribué de traitement de documents (30, 32, 34, 36, 38, 40, 42, 44, 46, 48, 50) à un premier emplacement (pièce 1A) et de transmettre la référence de document électronique sans son document électronique associé au système distribué de traitement de documents (30, 32, 34, 36, 38, 40, 42, 44, 46, 48, 50) à un second emplacement (pièce 2B), le système distribué de traitement de documents (30, 32, 34, 36, 38, 40, 42, 44, 46, 48, 50) étant couplé à la première mémoire et répondant à la réception de la référence de document électronique en créant une copie du document électronique associé à un troisième emplacement (38), le système distribué de traitement de documents (30, 32, 34, 36, 38, 40, 42, 44, 46, 48, 50) et la première mémoire étant physiquement séparés du dispositif portable de transport de référence de document électronique (2).

2. Dispositif portable de transport de référence de document électronique (2) selon la revendication 1, dans lequel l'émetteur-récepteur est un émetteur-récepteur infrarouge (8).

3. Dispositif portable de transport de référence de document électronique (2) selon la revendication 1 ou 2, qui comprend en outre :
c) un dispositif d'affichage (4) et une interface d'utilisateur graphique permettant d'indiquer à un utilisateur les identités des références de documents électroniques (18) enregistrées par le dispositif portable de transport de référence de document électronique (2).

4. Système permettant de communiquer avec un dispositif portable de transport de référence de document électronique (2) selon l'une des revendications 1 à 3, le dispositif portable de transport de référence de document électronique (2) comportant une mémoire permettant de stocker des références de documents, ledit système comprenant :
un réseau câblé permettant de fournir une liaison de communications entre les dispositifs (30, 32, 34, 36, 38, 40, 42) qui y sont couplés ;
un émetteur-récepteur (44, 46, 48, 50) couplé audit réseau câblé permettant d'établir une liaison de communications sans fil avec le dispositif portable de transport de référence de document électronique (2) et les dispositifs (30, 32, 34, 36, 38, 40, 42) couplés audit réseau câblé ;
un sous-système (42) couplé audit réseau câblé et communiquant avec ledit émetteur-récepteur (44,46,48,50) ; ledit sous-système (42) étant adapté pour opérer une base de données qui associe des références de document électronique aux documents électroniques ; chaque référence de document électronique identifiant un emplacement d'un seul document électronique enregistré dans une mémoire sur un dispositif (30, 32, 34, 42) fonctionnant sur ledit réseau câblé ; ledit sous-système (42) recevant, depuis ledit émetteur-récepteur (44, 46, 48, 50), une communication provenant du dispositif portable de transport de référence de document électronique (2) ; la communication incluant une référence de document électronique associée à un document électronique sélectionné et une requête pour un service fourni par un dispositif (36, 38, 40) couplé au réseau câblé qui doit être réalisé sur le document électronique sélectionné.

5. Système selon la revendication 4, dans lequel la communication que ledit sous-système (42) reçoit par ledit émetteur-récepteur (44, 46, 48,50) est sensible au contexte.

6. Système selon la revendication 5, dans lequel la communication sensible au contexte que ledit sous-système (42) reçoit par ledit émetteur-récepteur (44, 46, 48, 50) identifie un dispositif (36, 38, 40) sur lequel le service demandé doit être réalisé.

7. Système selon l'une des revendications 4 à 6, dans lequel chaque référence de document électronique spécifie un serveur de fichiers hôte (42) et l'emplacement sur le serveur de fichiers hôte (42) d'un document électronique et dans lequel les documents électroniques des références de documents associés sont stockés sur le serveur de fichiers hôte (42) couplé audit réseau câblé.

8. Système selon l'une des revendications 4 à 7, dans lequel le service fourni par le dispositif couplé au réseau câblé est un service de télécopie (40), un service d'impression (36, 38), un service de récapitulation, et un service de traduction ou un service de reconnaissance optique des caractères.

9. Système selon l'une des revendications 4 à 8, qui comprend en outre un télécopieur (40) ou une imprimante (36, 38) couplé(e) audit réseau pour créer des copies papier du document électronique sélectionné associé à la référence de document électronique.

10. Système selon la revendication 9 dans lequel le système distribué de traitement des documents (30, 32, 34, 36, 38, 40, 42, 44, 46, 48, 50) inclut une imprimante (36, 38) ou un télécopieur (40) pour imprimer des copies papier des documents électroniques en réponse à la réception de la référence de document électronique associée.

11. Système selon l'une des revendications 4 à 10, qui comprend en outre un scanner (60) couplé audit réseau pour créer des documents électroniques à partir de copies papier et associer chaque document électronique à une référence de document électronique.

12. Système selon l'une des revendications 4 à 11, dans lequel ledit émetteur-récepteur (44, 46, 48, 50) est un émetteur-récepteur infrarouge (44, 46, 48, 50).

13. Système selon l'une des revendications 4 à 12, dans lequel ledit émetteur-récepteur (44, 46, 48, 50) communique avec le dispositif portable de transport de référence de document électronique (2) sur un réseau de radiomessagerie (70), un réseau de téléphone public (64) ou un réseau de communication GSM.

14. Système selon l'une des revendications 4 à 13, dans lequel la communication provenant du dispositif portable de transport de référence de document électronique (2) est authentifiée à l'aide de clés partagées.

15. Système selon l'une des revendications 4 à 14, dans lequel la mémoire disponible sur le dispositif portable de transport de référence de document électronique (2) est beaucoup plus petite que la mémoire disponible sur les dispositifs (30, 32, 34, 36, 38, 40, 42), qui sont couplés audit réseau câblé, pour stocker des documents électroniques.

16. Système selon la revendication 4 dans lequel le sous-système (42) inclut un appareil de reconnaissance optique des caractères pour générer un document électronique à partir d'une copie papier d'un document, le document électronique ayant une représentation de document associée que l'appareil de reconnaissance optique des caractères peut transmettre.

17. Système selon la revendication 4 ou 16 dans lequel le sous-système (42) inclut un ordinateur personnel pour traiter un document électronique en réponse à la réception d'une référence de document électronique associée.

18. Système distribué selon l'une des revendications 4, 16, ou 17 dans lequel le dispositif portable de transport de référence de document électronique (2) indique également l'identité des parties du sous-système.

19. Procédé pour un dispositif portable de transport de référence de document électronique (2) de réception et distribution de références de documents électroniques dans un système distribué (30, 32, 34, 36, 38, 40, 42, 44, 46, 48, 50) incluant une base de données (42) et un système distribué de traitement de documents, la base de données (42) stockant les documents électroniques et les références de documents électroniques, chaque référence de document électronique indiquant un emplacement du document électronique associé dans une première mémoire, chaque référence de document électronique ayant une exigence de stockage dans une première mémoire inférieure à une exigence de stockage dans une seconde mémoire du document électronique associé, le dispositif portable de transport de référence de document électronique (2) étant physiquement séparé de la première mémoire, le dispositif portable de transport de référence de document électronique (2) incluant une seconde mémoire ayant une capacité très inférieure à une capacité de la première mémoire, le système distribué de traitement des documents (30, 32, 34, 36, 38, 40, 42, 44, 46, 48, 50) étant couplé à la base de données (42) et comportant un émetteur-récepteur (44, 46, 48, 50) pour recevoir et transmettre les références de documents électroniques sans leurs documents électroniques associés, le dispositif portable de transport de référence de document électronique (2) étant physiquement séparé à la fois de la base de données (42) et du système distribué de traitement des documents (30, 32, 34, 36, 38, 40, 42, 44, 46, 48, 50), le procédé comprenant les étapes consistant à :
a) déterminer si une commande a été reçue en provenance d'un utilisateur du dispositif portable de transport de référence de document électronique (2) ;
b) si la commande utilisateur a été reçue, transmettre une première référence de document électronique sans son document électronique associé au système distribué de traitement des documents (30, 32, 34, 36, 38, 40, 42, 44, 46, 48, 50) ;
c) déterminer si une seconde référence de document électronique sans son document électronique associé a été reçue en provenance du système distribué de traitement des documents (30, 32, 34, 36, 38, 40, 42, 44, 46, 48, 50) ; et
d) si la seconde référence de document électronique a été reçue, indiquer à l'utilisateur la présence de la seconde référence de document électronique.

20. Procédé selon la revendication 19 comprenant en outre les étapes consistant à :
e) transmettre un premier identifiant pour identifier le dispositif portable de transport de référence de document électronique (2).

21. Procédé selon la revendication 19 ou 20 comprenant en outre les étapes consistant à :
f) déterminer si un second identifiant d'un dispositif pouvant échanger des références de documents électroniques a été reçu ; et
g) si le second identifiant a été reçu, indiquer à un utilisateur le second identifiant.
